# EUROPEAN PATENT SPECIFICATION

(11) **EP 2 688 168 B1**
(45) Date of publication and mention of the grant of the patent: **06.12.2017**
(21) Application number: 12720537.5
(22) Date of filing: 15.03.2012
(51) Int. Cl.: H02G 3/04, H02G 3/06

(54) **COUPLING ACCESSORY FOR ELECTRICAL CONDUCTOR CARRIER TRAYS**
KUPPLUNGSZUBEHÖR FÜR TRÄGERSCHALEN ELEKTRISCHER LEITER
ACCESSOIRE DE LIAISON POUR CHEMINS DE CONDUCTEURS ÉLECTRIQUES

(30) Priority: 18.03.2011 ES 201130293
(43) Date of publication of application: 22.01.2014
(73) Proprietor: Unex Aparellaje Electrico S.L., 08903 L'Hospitalet de Llobregat (Barcelona) (ES)
(72) Inventor: MOSTAZO OVIEDO, José Antonio, E-08940 Cornellà de Llobregat (ES)
(74) Representative: Curell Suñol S.L.P.
(86) International application number: PCT/ES2012/070171
(87) International publication number: WO 2012/127087

(56) References cited:
- EP-A1- 0 474 336
- DE-A1- 4 445 570
- ES-U- 1 072 782
- GB-A- 904 087
- GB-A- 2 267 605

## Description

### Field of the invention

This invention relates to a coupling accessory for electrical conductor carrier trays, particularly an accessory intended to link together two or more electrical conductor carrier trays made up of a base part and/or a lid part, where the base part of the tray is shaped by a bottom wall, plain or perforated, and two perpendicular walls opposite each other, and the lid part of the tray is formed by a plain bottom wall and two attachment tabs for fitting on the walls of the base part. Both parts are made from synthetic insulating material and can be the same or different, and they can be located in one and the same plane or in different planes. The accessory to which the invention refers is also made from synthetic material, and it is made up of a base part and/or a lid part that can both adopt a general shape of flat angles, vertical upward or downward angles, section reductions, semi-T branches, T branches and cross branches, with equal or different mouths.

### State of the art

The current applicant is the owner of the patent under publication number ES2275483T3, which relates to a linking device for joining two sections of cable carrying tray sections comprising an elongated, straight section U-shaped body that defines two railings and a base that extends between said railings, with said linking device being suitable for joining said cable carrying tray sections so that they come into direct contact with one another, with a change of direction in a joining plane by said base and by said railings. The linking device comprises two linking parts differentiated in two rigid parts with the same length that form an angle between them, with each of said parts comprising a core wall, a flat, transverse clasp and means for fixing it to said cable carrying tray sections.

Document US5470021 discloses a connector for attaching cable trays by means of splicing plates, which obviates the need to fit the trays together. The splicing plates are arranged between the tray ends, so that the trays do not come into contact.

Document GB2038109 discloses a cable tray with special configuration, comprising an angled linking plate which, as in the preceding document, obviates the need to fit the trays together when assembling with a change of direction. The trays do not come into contact completely.

Document FR2488742 discloses some linking accessories that form elbows, made up of a channelled base part with a concave or convex dihedral shape and which is provided with a complementary lid part, said coupling accessories allowing the base and lid profile of the two channel sections to be coupled, maintaining, in the elbow, the protection afforded by the channels to the electrical conductions.

In most of the known cases, the splices between two trays intended to change the direction thereof or to make branches, are made up of side parts or angled semi-parts, which makes the assembly difficult because these parts have to be associated with one another and with the trays to be linked.

Document ES1072782U discloses a butt-strap applicable to trays that are formed by a base body and a lid body and which are arranged consecutively, head to head, leaving between them a free space serving as a joint.

Document GB904087A discloses an elbow fitting comprising front and rear cover-plates and wall sections, these components being held in their assembled position by screws.

Document EP0474336A1 discloses a coupling accessory according to the preamble of claim 1.

Document DE4445570A1 discloses a coupling accessory similar to the one defined in the preamble of claim 1, in which an overlapping area is formed in the coupling mouth of the coupling accessory by lugs, each lug extending from a wall of the base part of the coupling accessory.

Document GB2267605A discloses a cable tray bridging element formed by a one piece metal pressing comprising a base and upstanding sides which are provided with double-walled extensions at each end thereof for connecting the bridging element to a cable tray.

### Disclosure of the invention

In order to overcome these difficulties, the solution has been adopted of creating a single part base accessory that is capable of conveniently associating the two trays to be linked, while it is also capable of being complemented, where necessary, with a single part lid.

According to the preceding solution, the coupling accessory according to claim 1 has been developed.

Preferably, said depressed overlapping area is made up of a central part and two side parts in which there fits, in a stable and adjusted manner, the external periphery of an end part of said tray, along the whole of said depressed overlapping area, with the correct penetration of the end of said tray finding itself limited by said transverse step.

Preferably, said through attachment grooves, arranged on said central part of the depressed overlapping area, consist of two slots arranged parallel to the margins of said central part of the depressed overlapping area.

Preferably, said base part, on some points of the top edge of the side parts thereof that are comprised between said transverse step and said mortises, is provided with a hole for inserting a screw that fixes via pressure said lid part to said base part by applying the stress of its head against the margins of a notch provided on the tab of said lid part.

Preferably, said lid part has on its tabs a notch for inserting a flat screwdriver which, affecting said snap fitting tenon and said mortise, allows for said lid part to be detached from said base part.

Preferably, throughout the area of contact between said base part and said lid part, respective depression holes are provided, on the outside of said base part and on the inside of said lid part, so that in the coupling one complements the depression of the other and they adjust together preventing the passage of undesired objects.

In some embodiments, the accessory according to the invention consists of a semi-T-branch accessory with a transverse mouth, applicable to the side of one of said trays lacking the wall corresponding to the coupling area with said transverse mouth, with said transverse mouth being formed by a lower wing that is provided at the ends thereof, and optionally in the centre thereof, with through grooves in the form of slots, and which is intended to be installed under said tray allowing the mutual attachment via screws that pass through holes in said tray and said slots in the lower wing.

Preferably, said transverse mouth is provided, at the ends of the sides thereof, with two slots that extend perpendicularly to said lower wind of the transverse mouth.

Preferably, said base part of the semi-T branch accessory comprises an outer groove that starts on the top edge of the side walls, on some of the points located between said transverse step and said hole for inserting a pressure screw of the lid part against the base part, with said outer groove being perpendicular to the central part of said depressed overlapping area and forming a housing for inserting a flange arranged in a corresponding manner for this purpose inside the lid part of said accessory.

Preferably, the semi-T branch accessory comprises in said transverse mouth for the tray, both in said base part and in said lid part, an elastic seal that is applied during assembly against the part surrounding the open space of the wall of said tray and/or on the tab of the lid part of said tray.

Preferably, the walls and the bottom wall of said base part, as well as the wings and the bottom wall of said lid part, have an equal thickness, except said depressed overlapping areas with the trays and the joining areas of said base part with said lid part where the thickness is reduced.

Preferably, said base parts include, on their lower inner face, marked lines intended to facilitate conveniently the position and the attachment of partitions for separating chambers containing differentiated groups of electrical conductors.

In some embodiments, the accessory according to the invention forms a suitable reduction for connecting two of said trays of different widths, either to the right, the middle or the left, or a reduction that is suitable for connecting two of said trays of different height, either downwards or upwards.

### Brief description of the drawings

In order to facilitate the understanding of the exposed ideas, while disclosing various constructive details, some embodiments of this invention are described below, with reference to the drawings accompanying this specification, which, given their essentially illustrative purpose, should be interpreted as void of any limiting scope with respect to the ambit of the main claim.
Figure 1 is a perspective exploded view of a base part of the 90º horizontal elbow accessory, and the corresponding lid part arranged opposite the former, both according to the invention.
Figure 2 is a perspective view of the base part and lid part set in the preceding figure, once they have been mutually coupled.
Figure 3 is a top plan view of the base part of a 90º horizontal elbow accessory, wherein a mouth of the accessory is in front of a tray, while the other mouth incorporates the end of another tray.
Figure 4 is a top plane view of the accessory of Figure 1 completed with the lid part and with its two mouths covered by respective trays provided with their lids.
Figure 5 is a top perspective view of one end of the accessory of Figure 1, with one end of a tray portion inserted in the mouth thereof.
Figure 6 is an exploded perspective view of a base part of a semi-T accessory of the corresponding lid part arranged in a position opposite the former.
Figure 7 is a top perspective view of the base part and lid part set of the preceding figure, once their mutual coupling has been completed.
Figure 8 is an outer perspective view, on an enlarged scale, of a detail of the area of the mortises arranged in the central mouth of the base part of a semi-T accessory, showing an attachment groove for a shoulder of the lid part.
Figure 9 is an inner perspective view, on an enlarged scale, of a detail of the area of the attachment teeth arranged in the central mouth of the lid part of the semi-T accessory, showing the shoulder for fitting in the attachment groove of the base part.
Figure 10 is an inner perspective view of a detail of an attachment tooth of a lid part that is complementary to the mortise of the corresponding base part.
Figure 11, is an inner perspective view of a detail of the mortise of a base part that is complementary to an attachment tooth of the corresponding lid part.
Figure 12 is a side elevation view of an outside detail of the coupling of the lid part in the base part in the area corresponding to the attachment tooth of the former and the mortise of the second.
Figure 13 is a side elevation view of the detail of the preceding figure wherein a safety screw has been included for fitting the tenon in the mortise.
Figure 14 is a top plan view of the base part of a semi-T accessory, in a position facing a side of a tray provided with its lid and with its mouth facing an end of another tray, also provided with its lid.
Figure 15 is a top plan view of the components of the preceding figure, once they have been mutually coupled.
Figure 16 is a perspective view of the wider part of the semi-T accessory for coupling to one side of a tray, showing in relief elastic sealing strips attached on the inside.
Figure 17 is a top plan view of a central reducer accessory for the coupling of trays with different widths.
Figure 18 is a top plan view of a reducer accessory to the right, for coupling trays with different widths.
Figure 19 is a side elevation view of a central height reducer accessory for the upward coupling of trays with different heights.
Figure 20 is a side elevation view of a central height reducer accessory for the downward coupling of trays with different heights.
Figure 21 is an exploded perspective view of a base part of a 45º horizontal elbow accessory, and the corresponding lid part arranged in a position opposite the former.
Figure 22 is a perspective view of the base part and lid part set of the preceding figure, once they have been mutually coupled.
Figure 23 is an exploded perspective view of base and lid parts of a 90º vertical elbow accessory.
Figure 24 is a lateral perspective view of the components of the preceding figure once they have been mutually coupled.
Figure 25 is an exploded perspective view of base and lid parts of a 45º vertical elbow accessory.
Figure 26 is a lateral perspective view of the components of the preceding figure, once they have been coupled together.

### Detailed description of some embodiments of the invention

The accessory of the invention is intended to link together two or more electrical conductor carrier trays made up of a base part and/or a lid part, where the base part of the tray is formed by a bottom wall, either plain or with through grooves, and two perpendicular walls opposite one another, and the lid part of the tray is formed by a plain bottom wall and two attachment tabs that fit on the walls of the base part. Both parts are made from synthetic insulating material, can be the same or different, and can be placed in the same plane or in different planes. The accessory according to the invention is also made from synthetic material, and can adopt the general configuration of flat angles, vertical upward or downward angles, section reductions, semi-T branches, provided with two, three, four or more mouths for trays, etc.

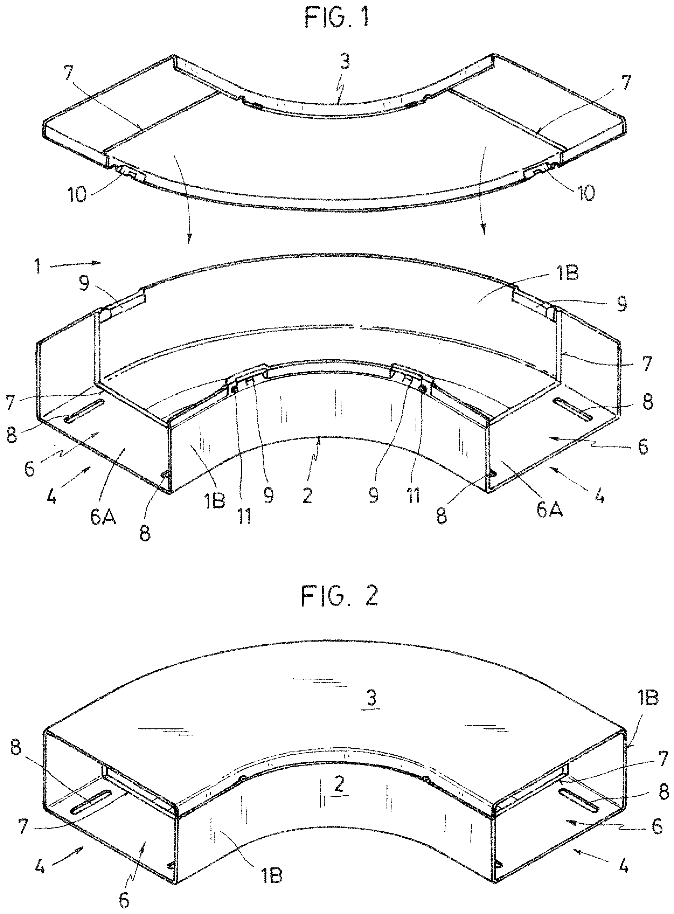

Figure 1 shows a coupling accessory 1 for electrical conductor carrier trays, particularly a 90º horizontal elbow, which is formed by a base part 2 and a lid part 3, which can be coupled together and which form on the whole, at least, one coupling mouth 4 for coupling to the external perimeter contour of an electrical conductor carrier tray 5, with said perimeter contour being formed by base 5A or lid 5B of tray 5. Said coupling mouth 4 forms a depressed overlapping area 6 with a straight U-shaped section, whereby said coupling mouth 4 covers the end of fitted tray 5, and which forms with the rest of base part 2 and/or lid part 3 a transverse step 7 serving as an insertion end stop for tray 5. Base part 2 is provided, on each side of the central part 6A of the depressed overlapping area 6, with a through attachment groove 8 and, in some points of the top edge of the sides thereof 1B that are near the transverse step 7 and outside the depressed overlapping area 6, with a mortise 9 for a snap fitting tenon 10 provided in a corresponding manner on lid part 3.

Depressed overlapping area 6 is made made up of a central part 6A and two side parts 6B in which there fits, in a stable and adjusted manner, the outer periphery of an end part of tray 5 along the whole length of depressed overlapping area 6, with the correct penetration of the end of the tray finding itself limited by transverse step 7 which acts as a tray penetration end stop 5.

Through attachment grooves 8 arranged in the central part 6A of depressed overlapping area 6 consist of two slots arranged parallel to the margins of said central part 6A.

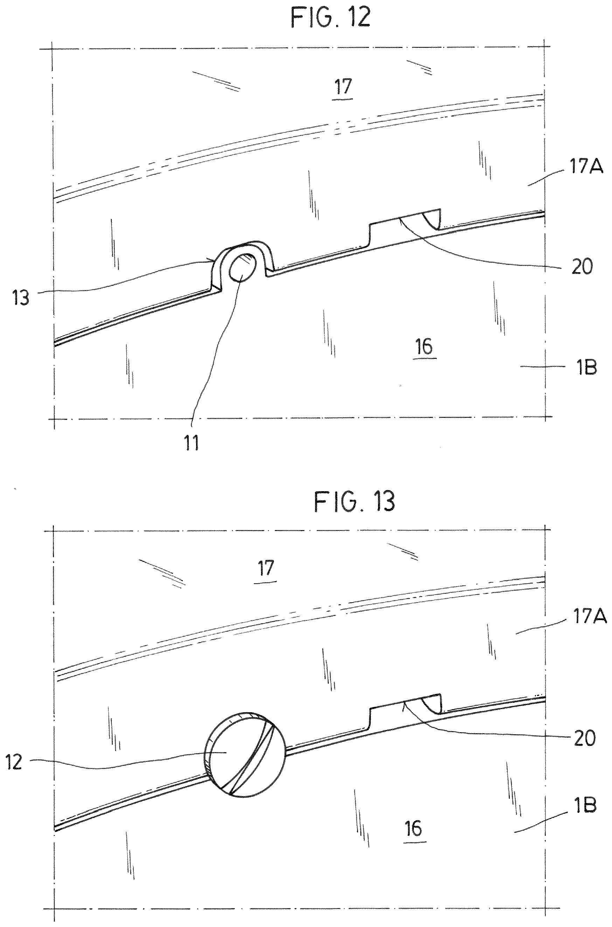

The base part 2, on some points on the top edge of side parts 1B thereof comprised between transverse step 7 and mortises 9, is provided with a hole 11 to insert a screw 12 that fixes via pressure lid part 3 to base part 2 by applying the stress of its head against the margins of a notch 13 provided on tab 3A of lid part 3, said arrangement being illustrated in detail in Figures 12 and 13.

Figure 2 shows the accessory in Figure 1 once the coupling of base part 2 and lid part 3 has been completed, without it being coupled to the respective trays.

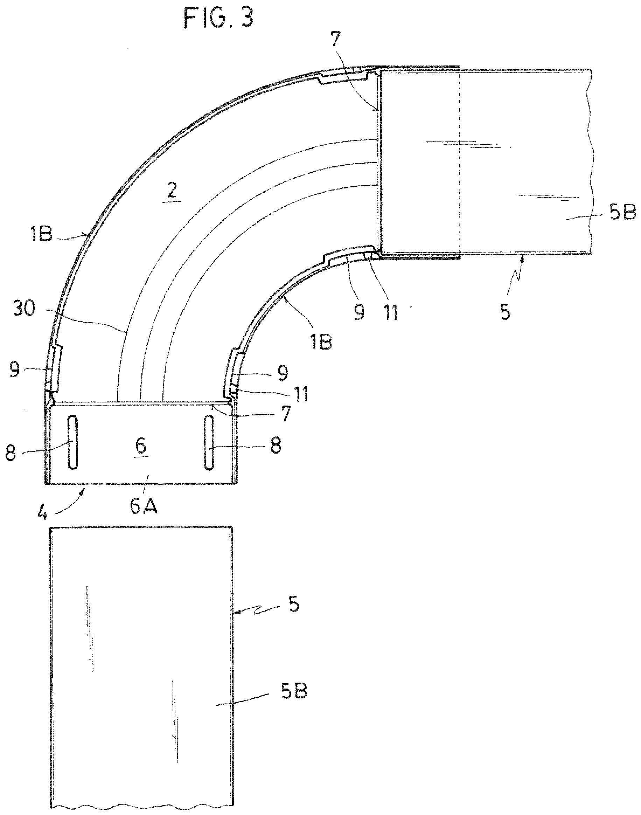

Figure 3 illustrates base part 2 of an accessory 1 in Figure 1, without lid part 3, which presents one of its two mouths 4 opposite the end of a tray 5 with lid 5B, while the other mouth 4 is covered by the end of a tray 5, also with its lid 5B.

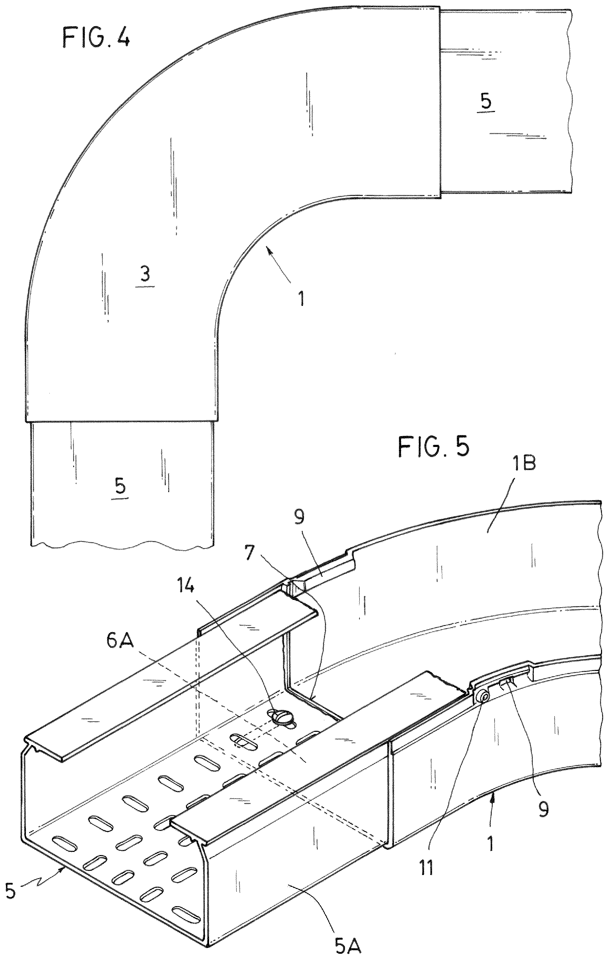

Figure 4 illustrates accessory 1 in Figures 2 and 3 once the two trays 5 with their lids 5B have been coupled to base part 2 and said base part has been closed by lid part 3.

Figure 5 shows in detail the position of the end of a base part 5A of a tray 5 in a mouth 4 of an accessory 1, both without lids. As can be seen, the part of the end of tray 5 is included in the depressed overlapping area 6 of mouth 4 of accessory 1 and it is retained therein by screws 14 assembled in grooves 8 of base part 2 and the conventional grooves of tray 5.

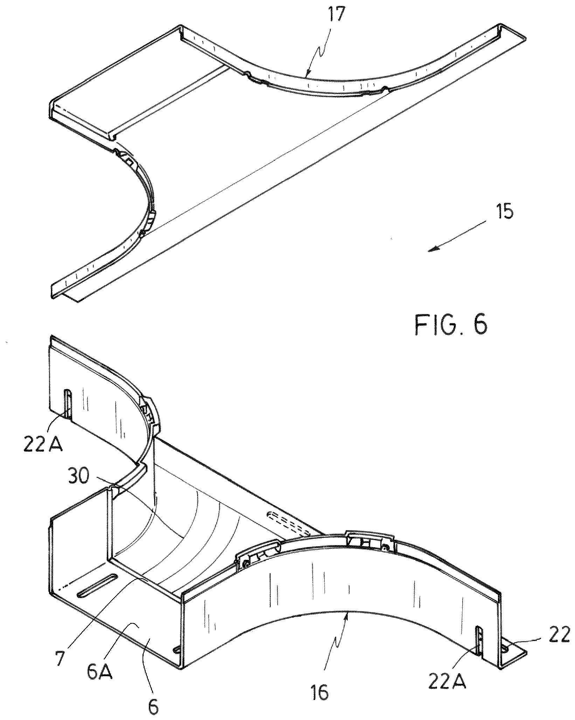

Figure 6 shows in a perspective and exploded view, a semi-T branch accessory 15 formed by a base part 16 and corresponding lid part 17, both arranged in an opposite position prior to the mutual coupling.

It is important to note that in these accessories according to the invention two of the mouths can be, or not, aligned together and form different angles together and with a third or fourth mouth, and can also be of different sizes.

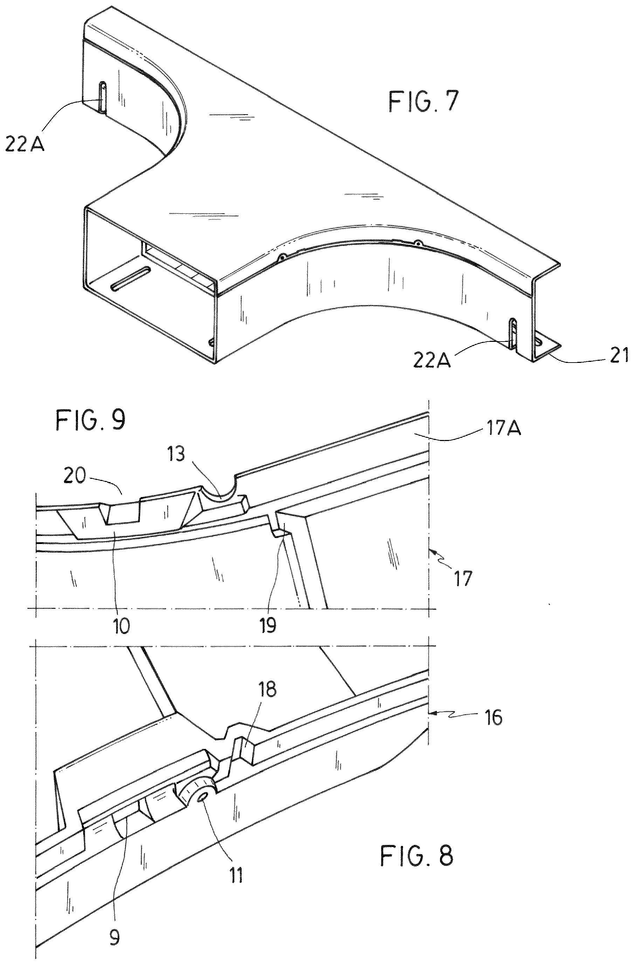

Figure 7 illustrates a top perspective view of the base part 16 and lid part 17 set once their mutual coupling has been completed to form the semi-T branch accessory 15.

As illustrated in Figures 8 and 9, which are details of Figure 6, base part 16 of semi-T branch accessory 15 incorporates an outer groove 18 that starts on the top edge of side walls 15A and in points between transverse step 7 and hole 11 for inserting pressure screw 12 to press lid part 17 against base part 16. Said outer groove 18 is perpendicular to central part 6A of depressed overlapping area 6 and forms a housing for fitting a flange 19 arranged in a corresponding manner for this purpose inside lid part 17.

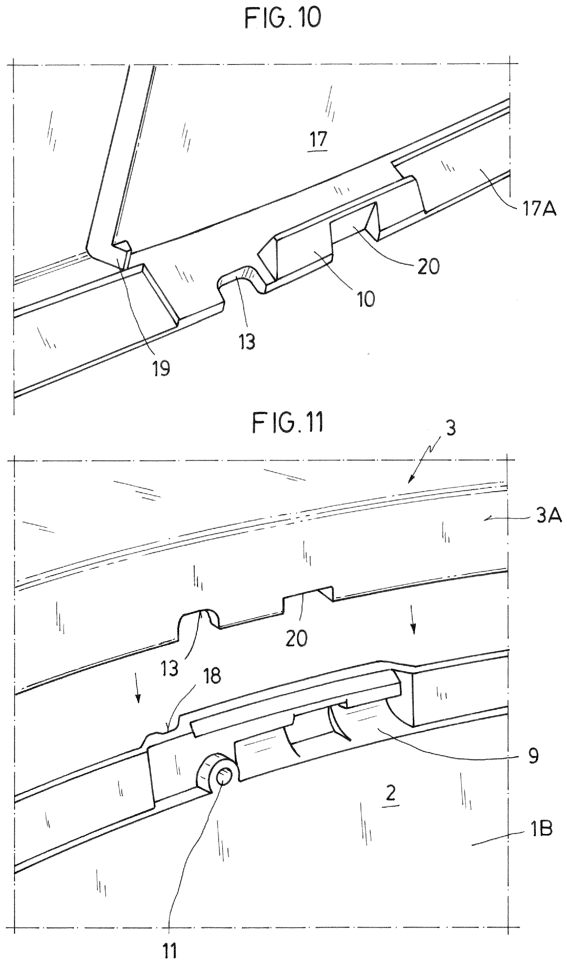

Figures 10 and 11 illustrate an arrangement of elements that are applicable to all the coupling accessories of the invention, according to which lid part 3 or 17 has in its tabs 3B or 17B a notch 20 for introducing a flat screwdriver which, affecting the attachment tooth 10 and mortise 9 provided on base part 2 or 16, allows the lid parts to be detached from the base parts.

Figures 12 and 13 detail in graph format the function of hole 11 for introducing a screw 12 that fixes via pressure lid part 3 or 17 to base part 2 or 16 by applying the stress of its head against the margins of notch 13 provided on tab 3A or 17A of lid parts 3 or 17.

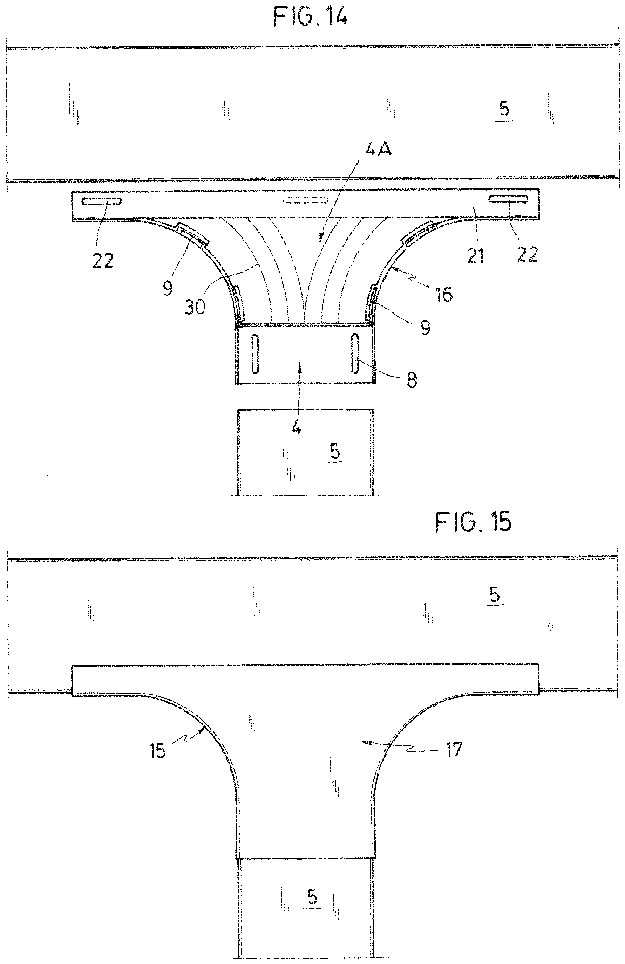

Figure 14 illustrates the fact that, in the case of a semi-T branch accessory 15, this has a transverse coupling mouth 4A which is applied to the side of a tray 5 lacking the wall corresponding to the coupling area with said transverse mouth 4A. The latter is formed by a lower wing 21 that is provided with two slots 22 at the ends thereof and which is intended to be installed under tray 5, allowing the mutual attachment using screws that pass through the conventional holes of tray 5 and through said slots 22 of lower wing 21.

Figure 15 illustrates semi-T branch accessory 15 in its complete state, installed by means of its transverse mouth 4A in the side of tray 5.

As can be observed in Figure 7, transverse mouth 4A of semi-T branch accessory 15 has respective outer through grooves 22A, at the ends of the sides of said transverse mouth 4A, perpendicular to lower wing 21.

As can be observed in Figures 1 and 6, throughout the contact area between base part 2 or 16 and lid part 3 or 17 respective fitting depressions are provided, located on the outside of the base part and on the inside of the lid part, so that in the coupling one complements the depression in the other and they adjust to one another preventing the passage of any undesired objects.

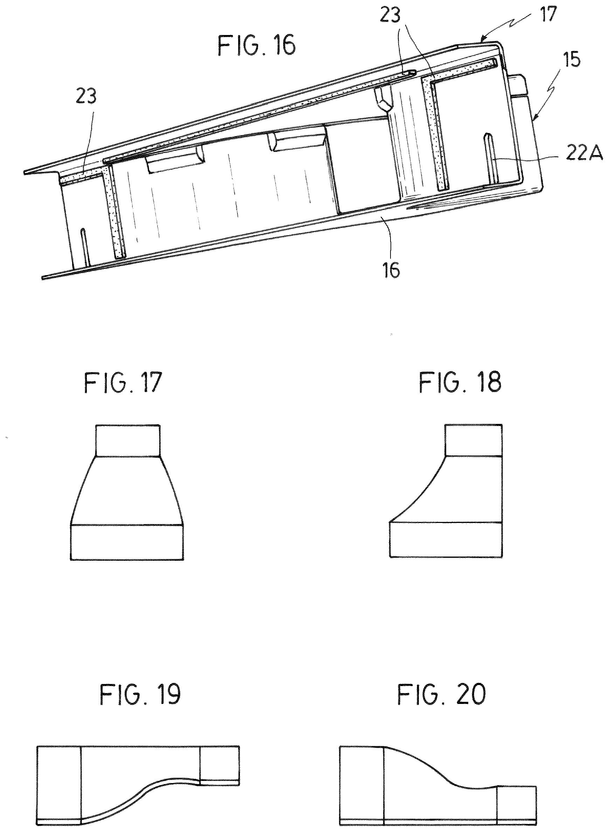

Figure 16 shows transverse mouth 4A of semi-T branch 15, which is provided, both in base part 16 and in lid part 17, with an elastic seal 23 that is applied, in the assembled position, against the part that surrounds the open space of the wall of tray 5 and/or in the tab of the lid of said tray 5.

Also, some accessories according to the invention have been provided that are likely to form suitable reductions for connecting two tray widths, either on the right as shown in Figure 18, in the middle as shown in Figure 17 or to the left, and suitable reductions for connecting two trays of different height, either downwards as in Figure 20 or upwards, as in Figure 19.

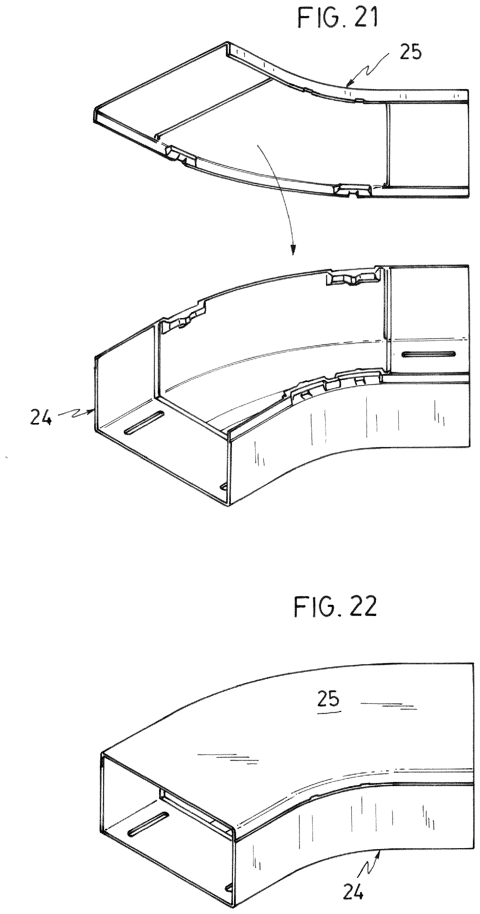

Figures 21 and 22 show, respectively, an exploded view of a base part 24 of a 45º horizontal elbow accessory, the corresponding lid part 25 arranged opposite the former and the set of said base 24 and lid 25 parts in the preceding figure, once they have been mutually coupled.

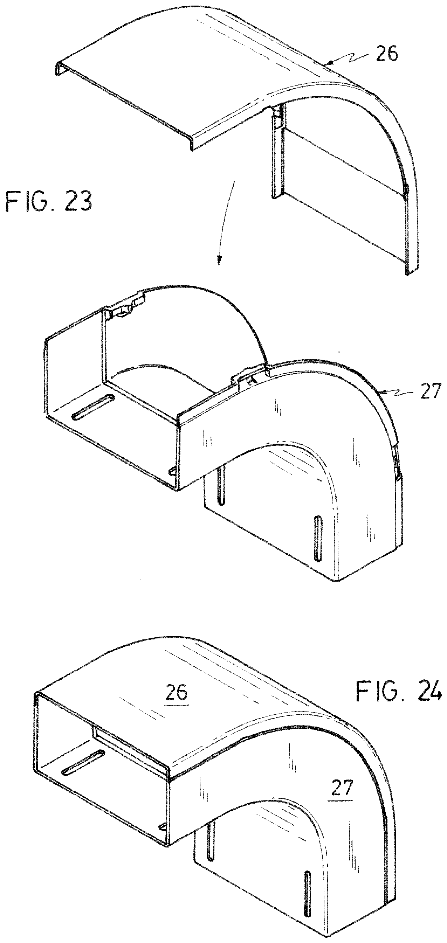

Figure 23 illustrates an exploded view of lid 26 and base 27 parts of a 90º vertical elbow accessory. Figure 24 shows the components of the preceding fiigure, once they have been coupled.

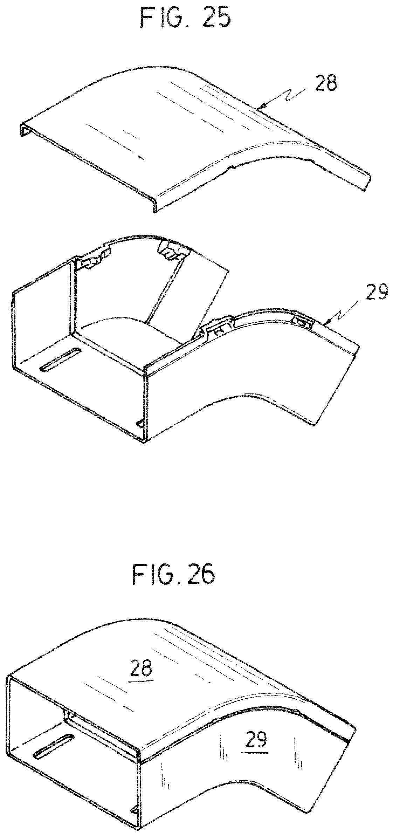

Figure 25 shows an exploded view of some lid 28 and base 29 parts of a 45º vertical elbow accessory. Figure 26 shows the components of the preceding figure, once they have been coupled.

As observed in the base parts of accessories drawn and described above, their lower inner faces have marked lines 30 intended to facilitate the position and attachment of separating partitions, to separate chambers containing differentiated groups of electrical conductors.

In order to facilitate the injection and increase the resistance of the accessories, walls and bottom wall of the base part, as well as the wings and bottom wall of the lid part, have an equal thickness, except said depressed areas overlapping with the trays and the joining areas of the base part with the lid part, where the thickness is reduced.

Finally, so that the accessories have the best possible aesthetical appearance and cleanliness, the injection point of the lid parts has been arranged in the face that is not visible in installation.

## Claims

1. Coupling accessory (1, 15) for electrical conductor carrier trays, intended to link together two or more electrical conductor carrier trays (5) made up of a base part (5A) and a lid part (5B), wherein said base part (5A) of the tray is formed by a bottom wall, plain or perforated, and two perpendicular walls opposite one another, and said lid part (5B) of the tray (5) is formed by a plain bottom wall and two tabs fitting on the walls of base part (5A) of tray (5), said coupling accessory (1, 15) comprising a base part (2, 16) and a lid part (3, 17) which can be coupled together and form as a whole, at least, a coupling mouth (4, 4A) for the coupling to the outer perimeter contour of the end of one of said electrical conductor trays (5), there being formed in said coupling mouth (4, 4A) a depressed overlapping area (6) with a continuous straight U-shaped section whereby said coupling mouth (4, 4A) covers the end of said fitted tray (5), said depressed overlapping area (6) forming with the rest of said base part (2, 16) and/or said lid part (3, 17) a transverse step (7) serving as an insertion end stop for said tray (5), **characterised in that** said base part (2, 16) is provided, on each side of central part (6A) of said depressed overlapping area (6), with a through attachment groove (8) and, on points of the top edge of the sides (1B) of said base part (2, 16), near said transverse step (7) and outside said depressed overlapping area (6), with a mortise (9) for a snap fitting tenon (10) arranged in a corresponding manner on said lid part (3, 17).

2. Accessory according to claim 1, **characterized in that** said depressed overlapping area (6) is made up of a central part (6A) and two side parts (6B) in which there fits, in a stable and adjusted manner, the outer periphery of an end portion of said tray (5), along the whole of said depressed overlapping area (6), the correct penetration of the end of said tray (5) finding itself limited by said transverse step (7).

3. Accessory according to claims 1 or 2, **characterized in that** said through attachment grooves (8), arranged in said central part (6A) of depressed overlapping area (6), consist of two slots arranged parallel to the margins of said central part of depressed overlapping area (6).

4. Accessory according to any of the claims 1 to 3, **characterized in that** said base part (2, 16), on some points of the top edge of the side parts thereof comprised between said transverse step (7) and said mortises (9), is provided with a hole (11) for introducing a screw (12) that fixes via pressure said lid part (3, 17) to said base part (2, 16) by applying the stress of its head against the margins of a notch (13) provided on tab (3A, 17A) of said lid part (3, 17).

5. Accessory according to any of the claims 1 to 4, **characterized in that** said lid part (3, 17) has in its tabs (3A, 17A) a notch (20) for introducing a flat screwdriver which, affecting said attachment tooth (10) and said mortise (9), allows said lid part (3, 17) to be detached from said base part (2, 16).

6. Accessory according to any of the claims 1 to 5, **characterized in that** throughout the contact area between said base part (2, 16) and said lid part (3, 17) respective fitting depressions are provided, placed on the outside of said base part (2, 16) and on the inside of said lid part (3, 17), so that in the coupling one complements the depression of the other and they adjust to one another preventing the passage of undesired objects.

7. Accessory according to any of the claims 1 to 6, **characterized in that** it consists of a semi-T branch accessory provided with a transverse mouth (4A), applicable to the side of one of said trays (5) lacking the wall corresponding to the coupling area with said transverse mouth (4A), with said transverse mouth (4A) being formed by a lower wing (21) that is provided at the ends thereof, and optionally in the centre thereof, with through grooves in the form of slots (22), and which is intended to be installed under said tray (5) allowing the mutual attachment by means of screws that pass through holes on said tray (5) and said slots (22) of lower wing (21).

8. Accessory according to claim 7, **characterized in that** said transverse mouth (4A) is provided, at the ends of its sides, with two slots (22A) which extend perpendicularly to said lower wing (21) of transverse mouth (4A).

9. Accessory according to claims 7 or 8, **characterized in that** said base part (16) of semi-T branch accessory (15) comprises an outer groove (18) which starts on the top edge of the side walls, on points between said transverse step (7) and said hole (11) for inserting a pressure screw (12) to press the lid part against the base part, said outer groove (18) being perpendicular to central part (6A) of said depressed overlapping area (6) and forming a housing for fitting a flange (19) arranged in a corresponding manner for this purpose inside lid part (17) of said accessory (15).

10. Accessory according to any of the claims 7 to 9, **characterized in that** it comprises in said transverse mouth (4A) for tray (5), both in said base part (16) and in said lid part (17), an elastic seal (23) which is applied during assembly against the part surrounding the open space of the wall of said tray (5) and/or on the tab of lid part (5B) of said tray (5).

11. Accessory according to any of the claims 1 to 10, **characterized in that** the walls and bottom wall of said base part (2, 16), and the wings and bottom wall of said lid part (3, 17) have the same thickness, except said depressed areas overlapping with trays (5) and the joining areas of said base part (2, 16) with said lid part (3, 17) where the thickness is reduced.

12. Accessory according to any of the claims 1 to 11, **characterized in that** said base parts (2, 16) include on their lower inner face marked lines (30) intended to facilitate conveniently the position and attachment of partitions for separating chambers containing differentiated groups of electrical conductors.

13. Accessory according to any of the claims 1 to 12, **characterized in that** it forms a suitable reduction for connecting two of said trays (5) with different widths, either to the right, the middle or to the left, or a suitable reduction for connecting two of said trays (5) with different heights, either downwards or upwards.

## Patentansprüche

1. Kopplungszubehörteil (1, 15) für Tragschalen für elektrische Leiter, das vorgesehen ist, zwei oder mehr Tragschalen (5) für elektrische Leiter, die aus einem Basisteil (5A) und einem Deckelteil (5B) gebildet sind, miteinander zu verbinden, wobei der Basisteil (5A) der Schale durch eine glatte oder perforierte Bodenwand und zwei senkrechte, einander gegenüberliegende Wände ausgebildet ist und der Deckelteil (5B) der Schale (5) durch eine glatte Bodenwand und zwei Ansätze, die an die Wände des Basisteils (5A) der Schale (5) passen, ausgebildet ist, wobei das Kopplungszubehörteil(1, 15) ein Basisteil (2, 16) und ein Deckelteil (3, 17) umfasst, die miteinander gekoppelt werden können und als Ganzes mindestens eine Kopplungsöffnung (4, 4A) zum Koppeln mit der äußeren Umfangskontur des Endes einer der Tragschalen (5) für elektrische Leiter ausbilden, wobei in der Kopplungsöffnung (4, 4A) ein vertiefter Überlappungsbereich (6) mit einem durchgehenden geraden U-förmigen Querschnitt ausgebildet ist, wodurch die Kopplungsöffnung (4, 4A) das Ende der eingepassten Schale (5) bedeckt, wobei der vertiefte Überlappungsbereich (6) mit dem Rest des Basisteils (2, 16) und/oder des Deckelteils (3, 17) einen quer verlaufenden Absatz (7) ausbildet, der als Einführungsanschlag für die Schale (5) dient, **dadurch gekennzeichnet, dass** der Basisteil (2, 16) auf jeder Seite eines Mittelteils (6A) des vertieften Überlappungsbereichs (6) mit einer durchgehenden Befestigungsnut (8) und an Punkten der Oberkante der Seiten (1B) des Basisteils (2, 16), nahe dem quer verlaufenden Absatz (7) und außerhalb des vertieften Überlappungsbereichs (6), mit einem Zapfenloch (9) für einen Einrastzapfen (10), der auf entsprechende Weise an dem Deckelteil (3, 17) angeordnet ist, versehen ist.

2. Zubehörteil nach Anspruch 1, **dadurch gekennzeichnet, dass** der vertiefte Überlappungsbereich (6) aus einem Mittelteil (6A) und zwei Seitenteilen (6B) gebildet ist, in die auf stabile und angepasste Weise der äußere Umfang eines Endabschnitts der Schale (5) passt, wobei entlang des gesamten vertieften Überlappungsbereichs (6) die korrekte Eindringtiefe des Endes der Schale (5) durch den quer verlaufenden Absatz (7) begrenzt wird.

3. Zubehörteil nach den Ansprüchen 1 oder 2, **dadurch gekennzeichnet, dass** die durchgehenden Befestigungsnuten (8), die in dem Mittelteil (6A) des vertieften Überlappungsbereichs (6) angeordnet sind, aus zwei Schlitzen bestehen, die parallel zu den Rändern des Mittelteils des vertieften Überlappungsbereichs (6) angeordnet sind.

4. Zubehörteil nach einem der Ansprüche 1 bis 3, **dadurch gekennzeichnet, dass** der Basisteil (2, 16) an einigen Punkten der Oberkante seiner Seitenteile, die zwischen dem quer verlaufenden Absatz (7) und den Zapfenlöchern (9) enthalten sind, mit einem Loch (11) zum Einführen einer Schraube (12) versehen ist, die mittels Druck, durch Anlegen der Kraft ihres Kopfes an die Ränder einer Kerbe (13), die an dem Ansatz (3A, 17A) des Deckelteils (3, 17) vorgesehen ist, den Deckelteil (3, 17) an dem Basisteil (2, 16) befestigt.

5. Zubehörteil nach einem der Ansprüche 1 bis 4, **dadurch gekennzeichnet, dass** der Deckelteil (3, 17) in seinen Ansätzen (3A, 17A) eine Kerbe (20) zum Einführen eines flachen Schraubendrehers aufweist, der es durch Einwirken auf den Befestigungszahn (10) und das Zapfenloch (9) ermöglicht, dass der Deckelteil (3, 17) von dem Basisteil (2, 16) gelöst wird.

6. Zubehörteil nach einem der Ansprüche 1 bis 5, **dadurch gekennzeichnet, dass** im gesamten Kontaktbereich zwischen dem Basisteil (2, 16) und dem Deckelteil (3, 17) entsprechende Einpassvertiefungen vorgesehen sind, die auf der Außenseite des Basisteils (2, 16) und auf der Innenseite des Deckelteils (3, 17) angeordnet sind, so dass beim Koppeln eine die Vertiefung der anderen ergänzt und sie sich aneinander anpassen und so das Hindurchgelangen unerwünschter Objekte verhindert wird.

7. Zubehörteil nach einem der Ansprüche 1 bis 6, **dadurch gekennzeichnet, dass** es aus einem halb-T-förmigen Abzweigzubehörteil besteht, das mit einer quer verlaufenden Öffnung (4A) versehen ist, die an die Seite einer der Schalen (5) anlegbar ist, der die Wand fehlt, die dem Kopplungsbereich mit der quer verlaufenden Öffnung (4A) entspricht, wobei die quer verlaufende Öffnung (4A) durch einen unteren Flügel (21) ausgebildet ist, der an seinen Enden und optional in seiner Mitte mit durchgehenden Nuten in Form von Schlitzen (22) versehen ist und der dazu vorgesehen ist, unter der Schale (5) installiert zu werden, wobei die gegenseitige Befestigung mithilfe von Schrauben ermöglicht wird, die durch Löcher an der Schale (5) und die Schlitze (22) des unteren Flügels (21) verlaufen.

8. Zubehörteil nach Anspruch 7, **dadurch gekennzeichnet, dass** die quer verlaufende Öffnung (4A) an den Enden ihrer Seiten mit zwei Schlitzen (22A) versehen ist, die sich senkrecht zu dem unteren Flügel (21) der quer verlaufenden Öffnung (4A) erstrecken.

9. Zubehörteil nach den Ansprüchen 7 oder 8, **dadurch gekennzeichnet, dass** der Basisteil (16) des halb-T-förmigen Abzweigzubehörteils (15) eine äußere Nut (18) umfasst, die an der Oberkante der Seitenwände, an Punkten zwischen dem quer verlaufenden Absatz (7) und dem Loch (11) zum Einführen einer Druckschraube (12), um den Deckelteil gegen den Basisteil zu drücken, beginnt, wobei die äußere Nut (18) senkrecht zu dem Mittelteil (6A) des vertieften Überlappungsbereichs (6) ist und ein Gehäuse zum Einpassen eines Flansches (19) ausbildet, der auf entsprechende Weise zu diesem Zweck im Inneren des Deckelteils (17) des Zubehörteils (15) angeordnet ist.

10. Zubehörteil nach einem der Ansprüche 7 bis 9, **dadurch gekennzeichnet, dass** es in der quer verlaufenden Öffnung (4A) für die Schale (5) sowohl in dem Basisteil (16) als auch in dem Deckelteil (17) eine elastische Dichtung (23) umfasst, die während des Zusammenbauens an den Teil, der den offenen Raum der Wand der Schale (5) umgibt, und/oder an den Ansatz des Deckelteils (5B) der Schale (5) angelegt wird.

11. Zubehörteil nach einem der Ansprüche 1 bis 10, **dadurch gekennzeichnet, dass** die Wände und die Bodenwand des Basisteils (2, 16) und die Flügel und die Bodenwand des Deckelteils (3, 17) die gleiche Dicke aufweisen, mit Ausnahme der vertieften Bereiche, die sich mit den Schalen (5) überlappen, und der Verbindungsbereiche des Basisteils (2, 16) mit dem Deckelteil (3, 17), wo die Dicke verringert ist.

12. Zubehörteil nach einem der Ansprüche 1 bis 11, **dadurch gekennzeichnet, dass** die Basisteile (2, 16) auf ihrer unteren Innenfläche markierte Linien (30) umfassen, die dazu vorgesehen sind, unaufwändig die Position und Befestigung von Trennwänden zum Abtrennen von Kammern zu ermöglichen, die differenzierte Gruppen elektrischer Leiter enthalten.

13. Zubehörteil nach einem der Ansprüche 1 bis 12, **dadurch gekennzeichnet, dass** es entweder rechts, in der Mitte oder links eine geeignete Verjüngung zum Verbinden von zwei der Schalen (5) mit unterschiedlichen Breiten oder entweder nach unten oder nach oben eine geeignete Verjüngung zum Verbinden von zwei der Schalen (5) mit unterschiedlichen Höhen ausbildet.

## Revendications

1. Accessoire de liaison (1, 15) pour des chemins de conducteurs électriques, conçu pour relier l'un à l'autre/les uns aux autres deux ou plus de deux chemins de conducteurs électriques (5) composés d'une partie de base (5A) et d'une partie couvercle (5B), dans lequel ladite partie de base (5B) du chemin est formée d'une paroi inférieure, pleine ou perforée, et de deux parois perpendiculaires se faisant face, et ladite partie couvercle (5B) du chemin (5) est formée d'une paroi inférieure pleine et de deux ailettes qui s'emboîtent sur les parois de la partie de base (5A) du chemin (5), ledit accessoire de liaison (1, 15) comprenant une partie de base (2, 16) et une partie couvercle (3, 17) qui peuvent être reliées l'une à l'autre et forment dans leur ensemble, au moins, une embouchure de liaison (4, 4A) pour la liaison au contour périmétrique externe de l'extrémité de l'un desdits chemins de conducteurs électriques (5), une zone de chevauchement enfoncée (6) étant formée dans ladite embouchure de liaison (4, 4A), qui présente une section droite en forme de U continue moyennant quoi ladite embouchure de liaison (4, 4A) recouvre l'extrémité dudit chemin emboîté(5), ladite zone de chevauchement enfoncée (6) formant avec le reste de ladite partie de base (2, 16) et/ou ladite partie couvercle (3, 17) une marche transversale (7) servant de butée d'insertion pour ledit chemin (5), **caractérisé en ce que** ladite partie de base (2, 16) est dotée, de chaque côté d'une partie centrale (6A) de ladite partie de chevauchement enfoncée (6), d'une rainure de fixation traversante (8) et, sur des points du bord supérieur des côtés (1B) de ladite partie de base (2, 16), près de ladite marche transversale (7) et à l'extérieur de ladite zone de chevauchement enfoncée (6), d'une mortaise (9) pour un tenon à encliquetage (10) agencée d'une manière correspondante sur ladite partie couvercle (3, 17).

2. Accessoire selon la revendication 1, **caractérisé en ce que** ladite zone de chevauchement enfoncée (6) est composée d'une partie centrale (6A) et de deux parties latérales (6B) dans lesquelles s'emboîte, d'une manière stable et ajustée, la périphérie externe d'une partie d'extrémité dudit chemin (5), le long de l'ensemble de ladite zone de chevauchement enfoncée (6), la pénétration correcte de l'extrémité dudit chemin (5) se trouvant limitée par ladite marche transversale (7).

3. Accessoire selon la revendication 1 ou 2, **caractérisé en ce que** lesdites rainures de fixation traversantes (8), agencées dans ladite partie centrale (6A) de la zone de chevauchement enfoncée (6), sont composées de deux fentes agencées parallèles aux marges de ladite partie centrale de la zone de chevauchement enfoncée (6).

4. Accessoire selon l'une quelconque des revendications 1 à 3, **caractérisé en ce que** ladite partie de base (2, 16), sur certains points du bord supérieur des parties latérales de celle-ci compris entre ladite marche transversale (7) et ladite mortaise (9), est dotée d'un trou (11) pour l'introduction d'une vis (12) qui fixe par le biais d'une pression ladite partie couvercle (3, 17) sur ladite partie de base (2, 16) par l'application de la contrainte de sa tête contre les marges d'une encoche (13) disposée sur une ailette (3A, 17A) de ladite partie couvercle (3, 17).

5. Accessoire selon l'une quelconque des revendications 1 à 4, **caractérisé en ce que** ladite partie couvercle (3, 17) comprend dans ses ailettes (3A, 17A) une encoche (20) pour l'introduction d'un tournevis plat qui, en ayant un effet sur ladite dent de fixation (10) et ladite mortaise (9), permet à ladite partie couvercle (3, 17) d'être détachée de ladite partie de base (2, 16).

6. Accessoire selon l'une quelconque des revendications 1 à 5, **caractérisé en ce que**,e dans toute la zone de contact entre ladite partie de base (2, 16) et ladite partie couvercle (3, 17), desévidements d'emboîtement respectifs sont disposés, placés sur l'extérieur de ladite partie de base (2, 16) et sur l'intérieur de ladite partie couvercle (3, 17), de sorte que dans la liaison, l'un soit complémentaire à l'évidement de l'autre et qu'ils s'ajustent l'un à l'autre en empêchant le passage d'objets indésirables.

7. Accessoire selon l'une quelconque des revendications 1 à 6, **caractérisé en ce qu'**il est composé d'un accessoire de dérivation en semi-T doté d'une embouchure transversale (4A), applicable au côté de l'un desdits chemins (5) qui manque de la paroi correspondant à la zone de liaison présentant ladite embouchure transversale (4A), ladite embouchure transversale (4A) étant formée par une aile inférieure (21) qui est dotée au niveau des extrémités de celle-ci, et éventuellement dans le centre de celle-ci, de rainures traversantes sous la forme de fentes (22), et qui est conçue pour être installée sous ledit chemin (5) en permettant la fixation mutuelle au moyen de vis qui traversent des trous sur ledit chemin (5) et lesdites fentes (22) de l'aile inférieure (21).

8. Accessoire selon la revendication 7, **caractérisé en ce que** ladite embouchure transversale (4A) est dotée, au niveau des extrémités de ses côtés, de deux fentes (22A) qui s'étendent perpendiculairement à ladite aile inférieure (21) de l'embouchure transversale (4A).

9. Accessoire selon la revendication 7 ou 8, **caractérisé en ce que** ladite partie de base (16) de l'accessoire de dérivation en semi-T (15) comprend une rainure externe (18) qui commence sur le bord supérieur des parois latérales, sur des points entre ladite marche transversale (7) et ledit trou (11) pour l'insertion d'une vis de pression (12) pour exercer une pression de la partie couvercle contre la partie de base, ladite rainure externe (18) étant perpendiculaire à une partie centrale (6A) de ladite zone de chevauchement enfoncée (6) et formant un boîtier pour l'emboîtement d'un rebord (19) agencé d'une manière correspondante à cette fin à l'intérieur de la partie couvercle (17) dudit accessoire (15).

10. Accessoire selon l'une quelconque des revendications 7 à 9, **caractérisé en ce qu'**il comprend dans ladite embouchure transversale (4A) pour un chemin (5), à la fois dans ladite partie de base (16) et dans ladite partie couvercle (17), un joint élastique (23) qui est appliqué pendant l'assemblage contre la partie entourant l'espace ouvert de la paroi dudit chemin (5) et/ou sur l'ailette de la partie couvercle (5B) dudit chemin (5).

11. Accessoire selon l'une quelconque des revendications 1 à 10, **caractérisé en ce que** les parois et la paroi inférieure de ladite partie de base (2, 16), et les ailes et la paroi inférieure de ladite partie couvercle (3, 17) présentent la même épaisseur, à l'exception desdites zones enfoncées chevauchant les chemins (5) et des zones de liaison de ladite partie de base (2, 16) avec ladite partie couvercle (3, 17) où l'épaisseur est réduite.

12. Accessoire selon l'une quelconque des revendications 1 à 11, **caractérisé en ce que** lesdites parties de base (2, 16) comprennent sur leur face interne inférieure des lignes de repère (30) conçues pour faciliter de façon convenable le positionnement et la fixation de cloisons permettant de séparer des chambres contenant des groupes différenciés de conducteurs électriques.

13. Accessoire selon l'une quelconque des revendications 1 à 12, **caractérisé en ce qu'**il forme une réduction adaptée pour la liaison de deux desdits chemins (5) présentant des largeurs différentes, soit à droite, soit au milieu, soit à gauche, ou une réduction adaptée pour la liaison de deux desdits chemins (5) présentant des hauteurs différentes, soit vers le bas, soit vers le haut.
